# FASCICULE DE BREVET EUROPEEN

(11) **EP 3 839 457 B1**
(45) Date de publication et mention de la délivrance du brevet: **02.02.2022**
(21) Numéro de dépôt: 20207524.8
(22) Date de dépôt: 13.11.2020
(51) Int. Cl.: G01K 1/143, G01K 11/32, G01M 9/06, G01M 15/14

(54) **GROUPE PROPULSEUR D'AÉRONEF PRÉSENTANT UNE ENTRÉE D'AIR PRÉSENTANT UNE PAROI MUNIE D'UN DISPOSITIF DE MESURE À CAPTEUR OPTIQUE ENTOURÉ PAR UNE ENVELOPPE SOUPLE ACCOLÉE À LA DITE PAROI ET PROCÉDÉ D'INSTALLATION DUDIT DISPOSITIF**
FLUGZEUGTRIEBWERK MIT EINEM LUFTEINLASS, AN DESSEN WAND EIN VON EINEM FLEXIBLEN GEHÄUSE UMGEBENES MESSGERÄT MIT OPTISCHEM SENSOR BEFESTIGT IST, UND VERFAHREN ZUR INSTALLATION DES GERÄTS
JET ENGINE HAVING AN AIR INTAKE HAVING A WALL TO WHICH AN OPTICAL SENSOR MEASURING DEVICE EMBEDDED IN A FLEXIBLE HOUSING IS ATTACHED AND METHOD OF FASTENING SAID DEVICE

(30) Priorité: 17.12.2019 FR 1914556
(43) Date de publication de la demande: 23.06.2021
(73) Titulaire: AIRBUS OPERATIONS (S.A.S.), 31060 Toulouse (FR)
(72) Inventeur: MENNEBEUF, Laetitia, 31060 TOULOUSE Cedex 9 (FR); DUPE, Nicolas, 31060 TOULOUSE Cedex 9 (FR)
(74) Mandataire: Sarraméa, Claude

(56) Documents cités:
- WO-A1-99/61875
- DE-A1-102007 048 817

## Description

La présente invention concerne un dispositif de mesure susceptible d'être accolé à une paroi extérieure d'un objet mobile ou d'un objet fixe se trouvant dans un écoulement d'air en particulier pour mesurer la température de la surface de la paroi ainsi qu'un procédé d'installation dudit dispositif sur ladite paroi.

### Domaine technique

Lors d'essais en vol, des capteurs sont montés sur la surface extérieure d'un aéronef pour effectuer différents types de mesure. L'une d'elle consiste en la mesure de la température de la surface extérieure du fuselage, à savoir la température extérieure de la peau de l'aéronef et notamment la mesure au niveau de l'entrée d'air moteur.

### Technique antérieure

Le brevet FR2860293 déposé par Airbus France le 26 septembre 2003 décrit un dispositif pour mesurer des paramètres en essai de vol d'un aéronef. Le dispositif comprend un capteur monté dans un insert rigide entouré d'une enveloppe souple collée sur la surface extérieure d'une structure d'aéronef. L'enveloppe souple s'ajuste à la surface de l'aéronef et dispose d'une épaisseur plus grande que l'insert : ainsi l'insert et donc le capteur ne touche pas la structure de l'aéronef. Les vibrations de l'aéronef sont amorties par l'enveloppe et ne sont pas transmises au capteur.

Du fait de cette distance entre le capteur et la peau, un tel dispositif ne permet pas d'évaluer correctement la température de la peau. Il a été conçu pour des mesures de pression, de bruits ou autres au niveau de l'écoulement d'air soit du côté opposé du dispositif à celui de la peau.

Il convient de mentionner également les documents WO 99/61875 A1 et DE 10 2007 048817 A1 qui se rapportent tous deux à la surveillance des contraintes thermiques et d'effort s'exerçant sur des composants aéronautiques à l'aide d'une fibre optique apposée sur une paroi dudit composant.

La présente invention a pour but de proposer un dispositif de mesure et un procédé d'installation dudit dispositif permettant de pallier à cet inconvénient et d'améliorer la qualité des mesures réalisées.

### Exposé de l'invention

A cet effet, la présente invention concerne un groupe propulseur d'aéronef présentant une entrée d'air présentant une paroi munie d'un dispositif de mesure comprenant :
- une enveloppe souple présentant une cavité pourvue d'une ouverture débouchante et comportant une première face configurée pour être en contact avec une surface de la paroi, une deuxième face opposée à la première face, deux faces formant des bords longitudinaux de l'enveloppe et deux faces formant des extrémités de l'enveloppe,
- au moins une fibre optique est prévue dans ladite cavité dont l'ouverture débouchante est fermée par la paroi sur laquelle l'enveloppe s'applique, caractérisé en ce que les bords longitudinaux de l'enveloppe présentent une épaisseur décroissante s'effilant vers la périphérie et en ce que l'une des extrémités de l'enveloppe est configurée pour être connectée à une unité de gestion et en ce que l'autre des extrémités de l'enveloppe présente une épaisseur décroissante s'effilant vers un côté opposé à l'unité de gestion.

De cette manière, la fibre se trouve au plus près de la paroi pour laquelle des mesures sont souhaitées.

En outre, les bords de l'enveloppe présentant une épaisseur décroissante s'effilant vers la périphérie permettent d'offrir une surface perturbant très faiblement l'écoulement aérodynamique.

L'invention prévoit au moins l'une des caractéristiques optionnelles suivantes, prises isolément ou en combinaison.

La cavité est réalisée par déformation de l'enveloppe lorsqu'elle est appliquée sur la fibre.

La cavité est préformée dans l'enveloppe.

La fibre est revêtue d'une gaine en forme de manchon et la fibre est alors une fibre gainée.

Au moins une couche de matériau de fixation résistant aux conditions auxquelles est soumise la paroi, est prévue au moins partiellement entre les surfaces de l'enveloppe et de la paroi en contact.

La couche de matériau de fixation est prévue sur la paroi de la structure sur toute la surface destinée à être en contact avec l'enveloppe mais aussi la surface en vis-à-vis de l'ouverture de la cavité.

Le matériau de fixation est un silicone RTV.

La fibre optique mesure la température de ladite paroi.

La présente invention concerne également un présentant un tel groupe propulseur.

La présente invention concerne par ailleurs un procédé d'installation d'un dispositif de mesure sur une paroi d'une entrée d'air d'un groupe propulseur d'un aéronef, ledit dispositif comprenant une enveloppe souple présentant une cavité pourvue d'une ouverture débouchante et comportant une première face configurée pour être en contact avec une surface de la paroi, une deuxième face opposée à la première face, deux faces formant des bords longitudinaux de l'enveloppe et deux faces formant des extrémités de l'enveloppe, les bords longitudinaux de l'enveloppe présentant une épaisseur décroissante s'effilant vers la périphérie, l'une des extrémités de l'enveloppe étant configurée pour être connectée à une unité de gestion et l'autre des extrémités de l'enveloppe présentant une épaisseur décroissante s'effilant vers un côté opposé à l'unité de gestion, le procédé d'installation étant caractérisé en ce qu'il comprend successivement les étapes suivantes :
- application d'une couche de matériau de fixation sur la surface de la paroi ;
- dépôt d'une fibre optique sur ladite paroi;
- dépôt d'une enveloppe souple sur ladite paroi sur la couche de manière que la fibre optique s'insère dans ladite cavité de ladite enveloppe.

L'invention relative au procédé prévoit au moins l'une des caractéristiques optionnelles suivantes, prises isolément ou en combinaison.

Une couche de fixation est déposée en vis-à-vis de la cavité lorsque le dispositif est installé de manière que la fibre soit déposée sur ladite couche.

La fibre est revêtue d'une gaine et forme alors une fibre gainée et l'enveloppe est alors déposée de manière que la fibre gainée s'insère dans ladite cavité.

D'autres buts, caractéristiques et avantages ressortiront de la description de l'invention qui va suivre, description donnée à titre d'exemple uniquement non limitatif, en référence aux dessins ci-annexés dans lesquels :
La figure 1 représente une vue schématique en trois dimensions d'un aéronef ;
La figure 2 représente une vue schématique en trois dimensions d'un ensemble propulsif d'aéronef ;
La figure 3 représente une vue en coupe de côté d'un dispositif de mesure accolé à une paroi d'une structure selon la présente invention ;
La figure 4 représente une vue en perspective de la première étape d'un procédé d'installation selon la présente invention d'un dispositif de mesure tel que celui représenté schématiquement sur la figure 3 sur une entrée d'air d'un ensemble propulsif tel que celui représenté schématiquement sur la figure 2 ;
La figure 5 représente une vue en perspective de la deuxième étape dudit procédé d'installation ;
La figure 6 représente une vue en perspective de la troisième étape dudit procédé d'installation ;
La figure 7 représente une vue en perspective d'un dispositif de mesure une fois le procédé d'installation terminé.

### Description détaillée

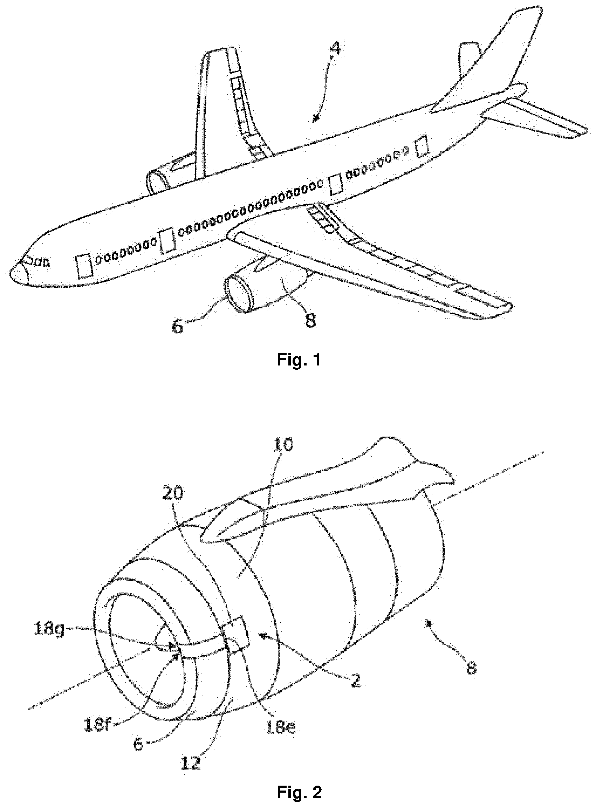

Selon une application illustrée sur les figures 1 et 2, le dispositif 2 de mesure selon la présente invention équipe une zone déterminée d'un aéronef 4 et plus particulièrement ici l'entrée d'air 6 d'un groupe 8 propulseur dans le cadre d'essais en vol. La présente invention concerne un groupe propulseur d'aéronef présentant une entrée d'air présentant une paroi 12 munie d'un dispositif 2 de mesure de température d'une surface 10 de ladite paroi 12.

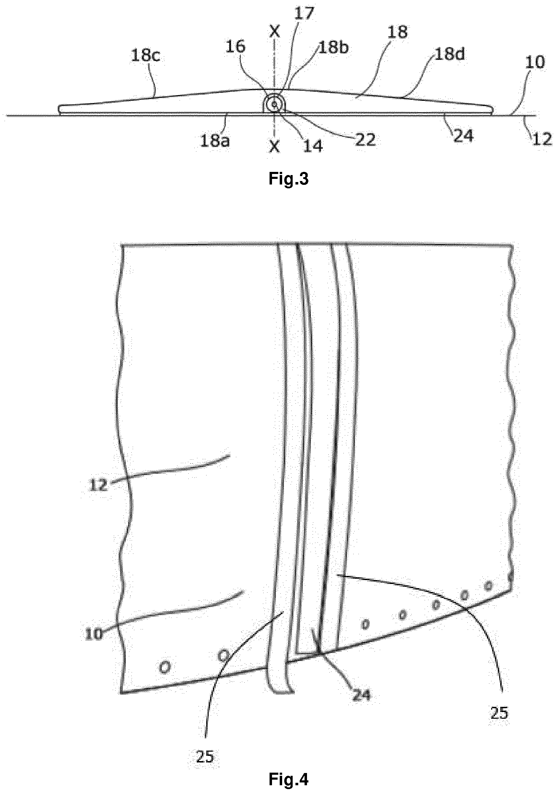

Comme représenté sur la figure 2, le dispositif 2 de mesure comprend un capteur optique que l'on accole à ladite surface 10 de la paroi de la structure concernée. Ainsi, le capteur est maintenu au plus près de la paroi pour effectuer des mesures. Selon la forme de réalisation illustrée, le capteur optique est une fibre 14 optique dont le fonctionnement est de type connu et ne sera pas décrit plus en détail. La fibre optique a pour avantage de résister aux températures importantes inhérentes aux entrées 6 d'air moteur ainsi que d'être souple pour épouser les contours de celle-ci. Elle présente également pour avantage d'être peu encombrante et légère. Elle permet par sa longueur possible de s'appliquer à des structures de grande dimension comme l'entrée d'air moteur. Elle offre une grande rapidité et une haute précision de mesure. La fibre optique est susceptible de mesurer des grandeurs physiques telles qu'à titre illustratif et non limitatif ici la température de la surface de la paroi sur laquelle elle est accolée, à savoir dans l'application retenue la température de la surface extérieure de l'entrée d'air. Elle offre la possibilité d'une multiplicité de mesures sur toute ou partie de sa longueur. La fibre 14 est revêtue d'une gaine 16 visible sur la figure 3 flexible en polytétrafluoroéthylène encore appelé PTFE offrant une résistance aux hautes températures. La gaine 16 entoure complètement la fibre et présente la forme d'un manchon. La fibre 14 revêtue de la gaine 16 sera désignée dans la suite de la description fibre gainée 17.

Comme le montre la figure 3, le dispositif 2 de mesure comprend également une enveloppe 18 souple dont la principale fonction est d'offrir un carénage au capteur optique, qui est dans l'exemple illustré la fibre optique gainée 17 pour la protéger contre tout type d'agressions extérieures (chocs d'objets, d'oiseaux ou autres contre l'entrée d'air, intempéries ou tout autre type d'agressions). Comme il sera vu plus loin, la fibre gainée peut être fixée ou pas contre la paroi : selon l'une ou l'autre configuration, l'enveloppe respectivement renforce ou assure le maintien de la fibre gainée contre la paroi de la structure concernée. L'enveloppe 18 souple peut être réalisée en matériau polymère par exemple en polyuréthane ou silicone ou composé de tout autre matériau suffisamment souple pour épouser les contours de l'aéronef et permettant de protéger la fibre gainée et de résister aux hautes températures du milieu. Elle peut être réalisée par moulage, usinage ou tout autre procédé de fabrication connu.

Dans l'exemple illustré sur les figures 2 à 7, l'enveloppe 18 présente une forme longiligne parallélépipédique de section transversale trapézoïdale. L'enveloppe peut se présenter sous une autre forme et ne pas être longiligne ni même parallélépipédique ou encore ne pas présenter une section trapézoïdale telle que celle représentée sur la figure 3.

Dans la forme de réalisation illustrée sur la figure 3, l'enveloppe 18 présente six faces :
- une première face 18a destinée à venir en contact avec la surface 10 de la paroi 12 de la structure ;
- une deuxième face 18b libre, parallèle et opposée à la première face 18a ;
- deux faces 18c, 18d formant les bords longitudinaux de l'enveloppe.

Les bords de l'enveloppe présentent une épaisseur décroissante s'effilant vers la périphérie permettant d'offrir une surface perturbant très faiblement l'écoulement aérodynamique ;
- deux faces 18e, 18f (visibles sur la figure 2), formant les extrémités de l'enveloppe, l'une d'entre elle 18e étant destinée à se connecter à une unité 20 de gestion des données mesurées, l'autre 18f correspondant à l'extrémité libre 18g de l'enveloppe. Selon une forme de réalisation possible, les faces 18e et 18f sont parallèles entre elles ; les faces 18e et 18f sont également orthogonales aux faces 18a et 18b. Comme indiqué plus haut, l'enveloppe 18 peut présenter tout type de forme : ainsi, les faces 18e et 18f peuvent ne pas être planes mais chanfreinées ou encore par exemple présenter une forme complexe. L'extrémité 18g libre de l'enveloppe peut aussi présenter une épaisseur décroissante s'effilant vers le côté opposé à l'unité 20 permettant d'offrir de la même façon que les bords de l'enveloppe une surface perturbant le plus faiblement possible l'écoulement aérodynamique. La face 18f est alors dans ce cas inclinée et non perpendiculaires aux faces 18a et 18b.

Comme illustré sur la figure 3, l'enveloppe 18 présente une cavité 22 débouchant au niveau de sa première face 18a destinée à être en contact avec la paroi 12 de la structure, ici l'entrée d'air. La cavité 22 est réalisée dans la partie centrale de plus grande épaisseur de l'enveloppe 18 et plus précisément dans la forme de réalisation illustrée au centre de celle-ci au niveau de son plan de symétrie longitudinal X-X. La cavité 22 forme logement pour recevoir la fibre gainée 17. Selon une autre forme de réalisation, l'enveloppe pourrait présenter une souplesse telle qu'elle ne comprend pas de cavité mais qu'appliquée sur la fibre gainée, elle se déforme de manière telle qu'une cavité 22 se crée de la même façon pour former logement.

L'enveloppe 18 et la fibre gainée 17 suivent une même direction longitudinale, qui correspond dans l'exemple illustré à celle du plan X-X de symétrie. L'épaisseur de la cavité 22 est telle que la surface extrémale de la fibre gainée destinée à être accolée à la surface 10 de la paroi 12 affleure la surface de la première face 18a de l'enveloppe 18 destinée à venir en contact avec la surface 10 de la paroi 12 également. De cette manière, la fibre gainée ne dépasse pas de l'enveloppe 18 et son extrémité se trouvant le plus vers l'extérieur de l'enveloppe se trouve sur le même plan que la première face 18a permettant d'adhérer au mieux au profil de la zone de la structure sur laquelle ladite face 18a est destinée à être accolée.

Selon une forme de réalisation illustrée, la forme de la cavité 22 correspond à la forme de la fibre gainée 17 qui y loge. La cavité 22 épouse les contours de la fibre gainée. Selon une forme de réalisation particulière illustrée sur la figure 3, la section transversale de la cavité 22 présente une forme en U, à savoir une surface courbe entourant la forme arrondie de la fibre gainée prolongée par deux bras formant l'ouverture débouchante du logement à travers laquelle la fibre gainée est insérée dans le logement offert par la cavité 22.

L'enveloppe 18 et la fibre gainée 17 adhèrent à la paroi 12 par l'intermédiaire d'au moins une couche 24 de matériau de fixation par exemple un matériau adhésif (visible sur la figure 3). La ou les couches 24 est/sont prévue(s) au moins partiellement entre les surfaces de l'enveloppe 18 et la paroi 12 en contact, sur une surface suffisamment grande pour permettre la fixation de l'enveloppe sur la structure dans les conditions du milieu environnant auxquelles elle est soumise. La ou les couches 24 de matériau de fixation est/sont prévue(s) sur la paroi 12 de la structure sur toute la surface destinée à être en contact avec l'enveloppe 18 mais aussi celle en vis-à-vis de l'ouverture de la cavité 22 se trouvant dans le plan de la face 18a. Dans la forme de réalisation illustrée, une couche 24 est appliquée formant une bande sur la paroi. Pour en faciliter la pose, elle peut prendre comme repère deux bandes 25 parallèles longitudinalement et espacées d'une largeur au moins égale à celle de la couche 24. Les bandes 25 sont utilisées comme référence pour appliquer la couche 24 entre celles-ci. Les bandes 25 peuvent être facilement retirées. Elles peuvent par exemple être constituées de simples bandes de scotch. La largeur de la couche 24 correspond à la largeur de la face 18a mais toute autre largeur est possible du moment qu'elle permette une fixation suffisante du dispositif de mesure.

Comme vu plus haut, il est également possible de ne prévoir un tel matériau qu'en vis à vis de l'enveloppe 18 et pas de la cavité 22, la fibre gainée 17 étant alors maintenue contre la paroi de la structure par l'enveloppe 18. Dans ce cas, un espace libre sans matériau pour la fibre gainée est prévu lors de l'application de la couche 24. Tout matériau de fixation est possible tant qu'il résiste aux conditions de l'environnement dans lequel le dispositif de mesure est soumis. Dans l'application d'une entrée d'air moteur par exemple, le dispositif 2 de mesure est soumis à de très fortes températures, à des conditions climatiques variées, à des changements de pression, à des flux d'air importants ainsi qu'à d'importantes vibrations. Le dispositif de mesure peut être utilisé en effet autant en vol réel qu'en vol simulé, en soufflerie par exemple. A titre d'exemple, l'utilisation d'un élastomère de silicone RTV (en anglais Room Temperature Vulcanization) permet de résister à de telles températures tout en permettant de manière additionnelle d'isoler la fibre gainée contre les vibrations en évitant un contact direct avec la paroi ce qui améliore les mesures. Dans la configuration dans laquelle l'application du matériau de fixation est limitée à la surface de la paroi destinée à être en contact avec la surface de la face 18a de l'enveloppe 18 (et pas avec la fibre gainée), la fibre gainée est en contact direct avec la paroi 12 pour une mesure plus précise de la température de celle-ci.

La présente invention concerne également le procédé d'installation du dispositif 2 de mesure sur la surface 10 de la paroi 12 d'une entrée d'air 6 d'un groupe propulseur d'un aéronef.

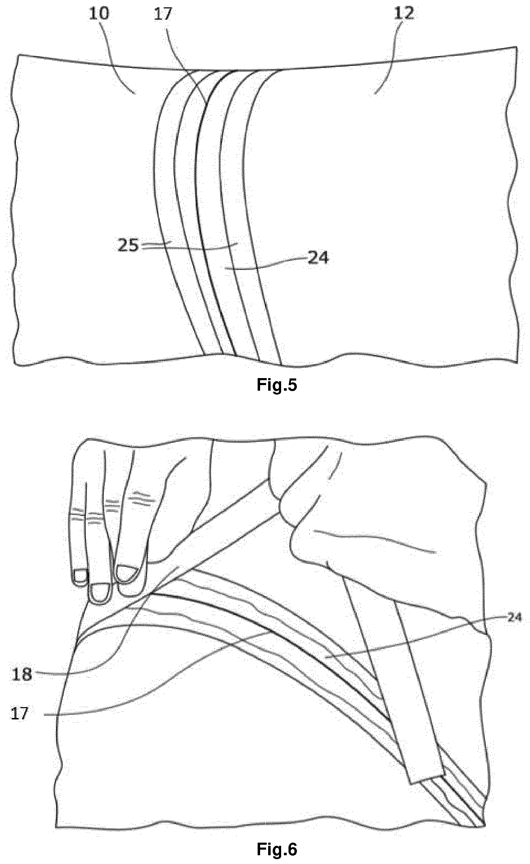

Le procédé d'installation du dispositif 2 de mesure sur la surface 10 de la paroi 12 de l'entrée d'air 6 du groupe propulseur d'aéronef suit des étapes dans un ordre bien déterminé. Selon une première étape illustrée sur la figure 4, deux bandes 25 de ruban adhésif sont déposées sur la paroi 12 pour délimiter la zone au niveau de laquelle le capteur doit être positionné. Une couche 24 de matériau de fixation ici un élastomère de silicone RTV est appliquée sur la surface 10 entre les bandes 25. Selon une deuxième étape illustrée sur la figure 5, la fibre optique gainée 17 est déposée sur l'une des couches 24 de matériau de fixation. La fibre gainée 17 peut être ainsi appliquée directement sur ladite couche permettant un positionnement précis et un maintien, le carénage offert par l'enveloppe souple étant appliqué seulement dans une étape ultérieure. Dans les dispositifs de mesure de type connu, c'est l'enveloppe qui est appliquée la première. Dans la présente invention, c'est le capteur à savoir la fibre optique gainée 17 qui est disposée sur la surface concernée en premier.

Selon une troisième étape illustrée sur la figure 6, l'enveloppe 18 souple est déposée sur la couche 24 de matériau de fixation de manière à ce que la fibre optique gainée 17 s'insère dans la cavité 22 de l'enveloppe 18.

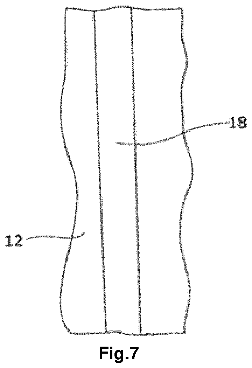

La figure 7 représente le dispositif de mesure une fois complètement installée sur la structure.

L'enveloppe 18 en matériau polymère et la fibre optique gainée 17 présente une très faible épaisseur ce qui permet de limiter les perturbations sur le flux d'air environnant. Les perturbations des flux d'air s'écoulant autour du dispositif de mesure ont une influence sur les mesures réalisées. Aussi le dispositif selon la présente invention améliore les mesures réalisées. Le procédé d'installation est facile et rapide ; il est également non intrusif puisqu'il n'est pas nécessaire de déformer ou percer la paroi de l'entrée d'air du groupe propulseur d'aéronef. La présente invention permet de mettre le capteur au plus près de la paroi pour laquelle des mesures sont souhaitées afin là encore d'en améliorer la précision.

## Revendications

1. Groupe propulseur d'aéronef présentant une entrée d'air (6) présentant une paroi (12) munie d'un dispositif (2) de mesure comprenant :
- une enveloppe (18) souple présentant une cavité (22) pourvue d'une ouverture débouchante et comportant une première face (18a) configurée pour être en contact avec une surface (10) de la paroi (12), une deuxième face (18b) opposée à la première face (18a), deux faces (18c, 18d) formant des bords longitudinaux de l'enveloppe (18) et deux faces (18e, 18f) formant des extrémités de l'enveloppe (18),
- au moins une fibre (14) optique est prévue dans ladite cavité (22) dont l'ouverture débouchante est fermée par la paroi (12) sur laquelle l'enveloppe (18) s'applique,
et **caractérisé en ce que** les bords longitudinaux de l'enveloppe (18) présentent une épaisseur décroissante s'effilant vers la périphérie et **en ce que** l'une des extrémités (18e) de l'enveloppe (18) est configurée pour être connectée à une unité (20) de gestion et **en ce que** l'autre des extrémités (18f) de l'enveloppe (18) présente une épaisseur décroissante s'effilant vers un côté opposé à l'unité (20) de gestion.

2. Groupe propulseur d'aéronef selon la revendication 1, **caractérisé en ce que** la cavité (22) est réalisée par déformation de l'enveloppe (18) lorsqu'elle est appliquée sur la fibre.

3. Groupe propulseur d'aéronef selon l'une des revendications 1 ou 2, **caractérisé en ce que** la cavité est préformée dans l'enveloppe (18).

4. Groupe propulseur d'aéronef selon l'une des revendications 1 à 3, **caractérisé en ce que** la fibre (14) est revêtue d'une gaine (16) en forme de manchon et la fibre est alors une fibre gainée (17).

5. Groupe propulseur d'aéronef selon l'une des revendications 1 à 4, **caractérisé en ce qu'**au moins une couche (24) de matériau de fixation résistant aux conditions auxquelles est soumise la paroi (12), est prévue au moins partiellement entre les surfaces de l'enveloppe (18) et de la paroi (12) en contact.

6. Groupe propulseur d'aéronef selon la revendication 5, **caractérisé en ce que** la couche (24) de matériau de fixation est prévue sur la paroi (12) de l'entrée d'air (6) sur toute la surface destinée à être en contact avec l'enveloppe (18) mais aussi sur la surface en vis-à-vis de l'ouverture de la cavité (22).

7. Groupe propulseur d'aéronef selon l'une des revendications 5 ou 6, **caractérisé en ce que** le matériau de fixation est un silicone RTV.

8. Groupe propulseur d'aéronef selon l'une des revendications 1 à 7, **caractérisé en ce que** la fibre (14) optique mesure la température de ladite paroi (12).

9. Aéronef présentant un groupe propulseur selon l'une des revendications 1 à 8.

10. Procédé d'installation d'un dispositif (2) de mesure sur une paroi (12) d'une entrée d'air (6) d'un groupe propulseur d'un aéronef, ledit dispositif (2) comprenant une enveloppe (8) souple présentant une cavité (22) pourvue d'une ouverture débouchante et comportant une première face (18a) configurée pour être en contact avec une surface (10) de la paroi (12), une deuxième face (18b) opposée à la première face (18a), deux faces (18c, 18d) formant des bords longitudinaux de l'enveloppe (18) et deux faces (18e, 18f) formant des extrémités de l'enveloppe (18), les bords longitudinaux de l'enveloppe (18) présentant une épaisseur décroissante s'effilant vers la périphérie, l'une des extrémités (18e) de l'enveloppe (18) étant configurée pour être connectée à une unité (20) de gestion et l'autre des extrémités (18f) de l'enveloppe (18) présentant une épaisseur décroissante s'effilant vers un côté opposé à l'unité (20) de gestion, le procédé d'installation étant **caractérisé en ce qu'**il comprend successivement les étapes suivantes :
- application d'une couche (24) de matériau de fixation sur la surface de la paroi (12) ;
- dépôt d'une fibre (14) optique sur ladite paroi (12) ;
- dépôt d'une enveloppe (18) souple sur ladite paroi (12) sur la couche (24) de manière que la fibre optique s'insère dans ladite cavité (22) de ladite enveloppe (18).

11. Procédé d'installation selon la revendication 10, **caractérisé en ce qu'**une couche (24) de fixation est déposée en vis-à-vis de la cavité (22) lorsque le dispositif est installé de manière que la fibre (14) soit déposée sur ladite couche (24).

12. Procédé d'installation selon l'une des revendications 10 ou 11, **caractérisé en ce que** la fibre (14) est revêtue d'une gaine (16) et forme alors une fibre gainée (17) et l'enveloppe (18) est alors déposée de manière que la fibre gainée s'insère dans ladite cavité (22).

## Patentansprüche

1. Flugzeugtriebwerk, das einen Lufteinlass (6) aufweist, der eine Wand (12) aufweist, die mit einem Messgerät (2) ausgerüstet ist, das Folgendes beinhaltet:
- ein flexibles Gehäuse (18), das einen Hohlraum (22), der über eine Durchgangsöffnung verfügt, aufweist und eine erste Fläche (18a), die dazu konfiguriert ist, mit einer Oberfläche (10) der Wand (12) in Kontakt zu sein, eine zweite Fläche (18b), die der ersten Fläche (18a) gegenüberliegt, zwei Flächen (18c, 18d), die Längskanten des Gehäuses (18) bilden, und zwei Flächen (18e, 18f), die Enden des Gehäuses (18) bilden, umfasst,
- wobei mindestens eine optische Faser (14) in dem Hohlraum (22) vorgesehen ist, dessen Durchgangsöffnung durch die Wand (12), auf der das Gehäuse (18) angebracht wird, verschlossen wird,
und **dadurch gekennzeichnet, dass** die Längskanten des Gehäuses (18) eine abnehmende Dicke aufweisen und sich zur Peripherie hin verjüngen und dass das eine der Enden (18e) des Gehäuses (18) dazu konfiguriert ist, mit einer Steuereinheit (20) verbunden zu sein, und dass das andere der Enden (18f) des Gehäuses (18) eine abnehmende Dicke aufweist und sich zu einer der Steuereinheit (20) gegenüberliegenden Seite verjüngt.

2. Flugzeugtriebwerk nach Anspruch 1, **dadurch gekennzeichnet, dass** der Hohlraum (22) durch eine Verformung des Gehäuses (18) erzielt wird, wenn dieses auf der Faser angebracht wird.

3. Flugzeugtriebwerk nach einem der Ansprüche 1 oder 2, **dadurch gekennzeichnet, dass** der Hohlraum in dem Gehäuse (18) vorgeformt ist.

4. Flugzeugtriebwerk nach einem der Ansprüche 1 bis 3, **dadurch gekennzeichnet, dass** die Faser (14) von einem hülsenförmigen Mantel (16) umgeben ist und die Faser somit eine ummantelte Faser (17) ist.

5. Flugzeugtriebwerk nach einem der Ansprüche 1 bis 4, **dadurch gekennzeichnet, dass** mindestens eine Befestigungsmaterialschicht (24), die gegenüber den Bedingungen, denen die Wand (12) ausgesetzt ist, beständig ist, mindestens teilweise zwischen den in Kontakt befindlichen Oberflächen des Gehäuses (18) und der Wand (12) vorgesehen ist.

6. Flugzeugtriebwerk nach Anspruch 5, **dadurch gekennzeichnet, dass** die Befestigungsmaterialschicht (24) auf der Wand (12) des Lufteinlasses (6) auf der gesamten Oberfläche, die dazu bestimmt ist, mit dem Gehäuse (18) in Kontakt zu sein, vorgesehen ist, jedoch auch auf der Oberfläche gegenüber der Öffnung des Hohlraums (22).

7. Flugzeugtriebwerk nach einem der Ansprüche 5 oder 6, **dadurch gekennzeichnet, dass** das Befestigungsmaterial ein RTV-Silikon ist.

8. Flugzeugtriebwerk nach einem der Ansprüche 1 bis 7, **dadurch gekennzeichnet, dass** die optische Faser (14) die Temperatur der Wand (12) misst.

9. Flugzeug, das ein Triebwerk nach einem der Ansprüche 1 bis 8 aufweist.

10. Verfahren zur Installation eines Messgeräts (2) an einer Wand (12) eines Lufteinlasses (6) eines Triebwerks eines Flugzeugs, wobei das Gerät (2) ein flexibles Gehäuse (18) beinhaltet, das einen Hohlraum (22), der über eine Durchgangsöffnung verfügt, aufweist und eine erste Fläche (18a), die dazu konfiguriert ist, mit einer Oberfläche (10) der Wand (12) in Kontakt zu sein, eine zweite Fläche (18b), die der ersten Fläche (18a) gegenüberliegt, zwei Flächen (18c, 18d), die Längskanten des Gehäuses (18) bilden, und zwei Flächen (18e, 18f), die Enden des Gehäuses (18) bilden, umfasst, wobei die Längskanten des Gehäuses (18) eine abnehmende Dicke aufweisen und sich zur Peripherie hin verjüngen, das eine der Enden (18e) des Gehäuses (18) dazu konfiguriert ist, mit einer Steuereinheit (20) verbunden zu sein, und das andere der Enden (18f) des Gehäuses (18) eine abnehmende Dicke aufweist und sich zu einer der Steuereinheit (20) gegenüberliegenden Seite verjüngt, wobei das Installationsverfahren **dadurch gekennzeichnet ist, dass** es nacheinander die folgenden Schritte beinhaltet:
- Anbringen einer Befestigungsmaterialschicht (24) auf der Oberfläche der Wand (12);
- Aufbringen einer optischen Faser (14) auf die Wand (12) ;
- Aufbringen eines flexiblen Gehäuses (18) auf die Wand (12) auf die Schicht (24), sodass die optische Faser in dem Hohlraum (22) des Gehäuses (18) zu liegen kommt.

11. Installationsverfahren nach Anspruch 10, **dadurch gekennzeichnet, dass** bei der Installation des Geräts eine Befestigungsschicht (24) gegenüber dem Hohlraum (22) aufgebracht wird, sodass die Faser (14) auf die Schicht (24) aufgebracht wird.

12. Installationsverfahren nach einem der Ansprüche 10 oder 11, **dadurch gekennzeichnet, dass** die Faser (14) von einem Mantel (16) umgeben ist und somit eine ummantelte Faser (17) bildet und das Gehäuse (18) anschließend so aufgebracht wird, dass die ummantelte Faser in dem Hohlraum (22) zu liegen kommt.

## Claims

1. Aircraft propulsion unit having an air intake (6) having a wall (12) provided with a measurement device (2), comprising:
- a flexible envelope (18) having a cavity (22) provided with an opening and comprising a first face (18a) configured to be in contact with a surface (10) of the wall (12), a second face (18b) that is opposite the first face (18a), two faces (18c, 18d) forming longitudinal edges of the envelope (18) and two faces (18e, 18f) forming ends of the envelope (18),
- at least one optical fibre (14) is provided in said cavity (22) whose opening is closed by the wall (12) on which the envelope (18) is applied,
and **characterized in that** the longitudinal edges of the envelope (18) have a decreasing thickness that tapers towards the periphery, and **in that** one of the ends (18e) of the envelope (18) is configured to be connected to a management unit (20), and **in that** the other of the ends (18f) of the envelope (18) has a decreasing thickness that tapers towards an opposite side from the management unit (20).

2. Aircraft propulsion unit according to Claim 1, **characterized in that** the cavity (22) is created by deformation of the envelope (18) when it is applied to the fibre.

3. Aircraft propulsion unit according to either of Claims 1 and 2, **characterized in that** the cavity is preformed in the envelope (18).

4. Aircraft propulsion unit according to one of Claims 1 to 3, **characterized in that** the fibre (14) is clad in a sheath (16) in the form of a sleeve and the fibre is then a sheathed fibre (17).

5. Aircraft propulsion unit according to one of Claims 1 to 4, **characterized in that** at least one layer (24) of securing material, which is resistant to the conditions to which the wall (12) is subjected, is provided at least partially between the surfaces of the envelope (18) and of the wall (12) with which it is in contact.

6. Aircraft propulsion unit according to Claim 5, **characterized in that** the layer (24) of securing material is provided on the wall (12) of the air inlet (6), over the entire surface that is intended to be in contact with the envelope (18), but also on the surface facing the opening of the cavity (22).

7. Aircraft propulsion unit according to either of Claims 5 and 6, **characterized in that** the securing material is an RTV silicone.

8. Aircraft propulsion unit according to one of Claims 1 to 7, **characterized in that** the optical fibre (14) measures the temperature of said wall (12).

9. Aircraft having a propulsion unit according to one of Claims 1 to 8.

10. Method for installing a measurement device (2) on a wall (12) of an air intake (6) of a propulsion unit of an aircraft, said device (2) comprising a flexible envelope (18) having a cavity (22) provided with an opening and comprising a first face (18a) configured to be in contact with a surface (10) of the wall (12), a second face (18b) that is opposite the first face (18a), two faces (18c, 18d) forming longitudinal edges of the envelope (18) and two faces (18e, 18f) forming ends of the envelope (18), the longitudinal edges of the envelope (18) having a decreasing thickness that tapers towards the periphery, one of the ends (18e) of the envelope (18) being configured to be connected to a management unit (20), and the other of the ends (18f) of the envelope (18) having a decreasing thickness that tapers towards an opposite side from the management unit (20), the installation method being **characterized in that** it comprises, in succession, the following steps:
- applying a layer (24) of securing material on the surface of the wall (12);
- depositing an optical fibre (14) on said wall (12);
- depositing a flexible envelope (18) on said wall (12) on the layer (24) in such a way that the optical fibre is inserted into said cavity (22) of said envelope (18).

11. Installation method according to Claim 10, **characterized in that** a securing layer (24) is deposited facing the cavity (22) when the device is installed in such a way that the fibre (14) is deposited on said layer (24).

12. Installation method according to either of Claims 10 and 11, **characterized in that** the fibre (14) is clad with a sheath (16) and then forms a sheathed fibre (17) and the envelope (18) is then deposited in such a manner that the sheathed fibre is inserted into said cavity (22).
